# EUROPÄISCHE PATENTANMELDUNG

(11) **EP 2 586 666 A2**
(43) Veröffentlichungstag der Anmeldung: **01.05.2013**
(21) Anmeldenummer: 12189847.2
(22) Anmeldetag: 24.10.2012
(51) Int. Cl.: B60S 1/04, B60S 1/34, B61D 15/06, B61D 17/06, B62D 25/08

(54) **Front-Anordnung für ein Fahrzeug, insbesondere für ein Schienenfahrzeug, mit einer Scheibenreinigungseinrichtung**

(30) Priorität: 25.10.2011 DE 102011085163
(71) Anmelder: Bombardier Transportation GmbH, 10785 Berlin (DE)
(72) Erfinder: Petto, Michael, 1220 Wien (AT)
(74) Vertreter: Patentanwälte Bressel und Partner

(57) **Zusammenfassung**

Die Erfindung betrifft eine Front-Anordnung für ein Fahrzeug, insbesondere für ein Schienenfahrzeug, z. B. eine Straßenbahn, wobei die Front-Anordnung ein Aufprallelement (20) mit einer nach vorne weisenden Aufprallfläche (20a) und eine Scheibenreinigungseinrichtung (10) aufweist, die wiederum eine Antriebseinrichtung (11) und eine von der Antriebseinrichtung (11) antreibbare Frontscheiben-Wischereinrichtung (13) aufweist. Das Aufprallelement (20) ist ausgestaltet, bei einem Aufprall eines Körpers, insbesondere eines anderen Fahrzeuges, auf die Front des Fahrzeuges und damit auf die Aufprallfläche (20a) des Aufprallelementes (20) Stoßkräfte aufzunehmen und abzuleiten, wobei das Aufprallelement mit zumindest einem Stoßverzehrelement gekoppelt ist. Die Scheibenreinigungseinrichtung (10) ist an dem Aufprallelement (20) für das Fahrzeuges befestigt, wobei das Aufprallelement und die daran befestigte Scheibenreinigungseinrichtung (10) relativ zu einer Abstützung der Front-Anordnung und somit in einem in das Fahrzeug eingebauten Zustand relativ zu der tragenden Konstruktion des Fahrzeugs beweglich ist, um bei einem Auftreten der Stoßkräfte zurückzuweichen und ein Verzehren der einwirkenden Stoßenergie durch das zumindest eine Stoßverzehrelement zu ermöglichen.

## Beschreibung

Die Erfindung betrifft eine Front-Anordnung für ein Fahrzeug, insbesondere für ein Schienenfahrzeug, z. B. eine Straßenbahn, mit einer Scheibenreinigungseinrichtung, ein Fahrzeug mit einer solchen Front-Anordnung, ein Verfahren zum Herstellen einer solchen Front-Anordnung sowie ein Verfahren zum Betreiben eines Fahrzeuges, insbesondere eines Schienenfahrzeugs, z. B. eine Straßenbahn.

Bekannte Scheibenreinigungsanlagen für Schienenfahrzeuge weisen die Komponenten Antriebseinrichtung, Wasserbehälter, Wischerarm und Wischerblatt auf. Die Antriebseinrichtung befindet sich gewöhnlich in einem wasserdichten Gehäuse. Wischerarm und Wischerblatt bilden die Wischereinrichtung, welche unterhalb des Frontfensters angeordnet ist. Der das Reinigungsmittel enthaltene Wasserbehälter kann entfernt von der Wischereinrichtung und dem Antriebseinrichtung angeordnet sein.

Scheibenreinigungseinrichtungen sind typischerweise unterhalb der Windschutzscheibe (Frontscheibe) angeordnet. Aber auch für die Heckscheibe des Fahrzeuges kann eine Scheibenreinigungsanlage vorsehen sein. Daher ist unter einer Front-Anordnung für ein Fahrzeug auch eine am Heck des Fahrzeugs angeordnete oder anordenbare Anordnung zu verstehen. Dabei ist anzumerken, dass sich zumindest bei Schienenfahrzeugen die Fahrtrichtung umkehren kann.

Die Komponenten der Scheibenreinigungsanlage wie Antriebseinrichtung, Wasserbehälter und Wischereinrichtung sind nach dem Stand der Technik zumindest teilweise an der Fahrzeugkarosserie bzw. an tragenden Teilen des Fahrzeuges befestigt. So wird beispielsweise in DE 199 21 930 A1 eine Scheibenreinigungsanlage beschrieben, bei der die aus Wasserbehälter und Wasserpumpe gebildete Scheibenwascheinrichtung an der Fahrzeugkarosserie befestigt ist.

Bei einer Kollision eines Schienenfahrzeugs mit einem Körper, insbesondere mit einem anderen Fahrzeug, kann die Scheibenreinigungseinrichtung bereits bei einem Aufprall mit geringer Fahrgeschwindigkeit beschädigt oder irreparabel zerstört werden. Zwar sind Schienenfahrzeuge häufig so ausgelegt, dass die tragende Konstruktion (d.h. Fahrzeugkarosserie) Kollisionen bei geringen Fahrgeschwindigkeiten bis ca. 6 km/h - unbeschadet übersteht, die Scheibenreinigungseinrichtung muss aber häufig selbst nach einem solchen "low-speed-crash" ausgetauscht werden. In ungünstigen Fällen kann die Scheibenreinigungseinrichtung zusätzlich die Frontscheibe beschädigen oder zerstören. Dies gilt insbesondere bei modernen Straßenbahnen, die dem Fahrer eine Sitzposition sehr nahe am vorderen Ende des Schienenfahrzeugs bieten, sodass der Fahrer durch die Frontscheibe Hindernisse oder Personen in sehr kurzen Entfernungen vor dem Fahrzeug erkennen kann. Statt den früher üblichen Puffern, die an der Fahrzeugfront verhältnismäßig weit hervorragen, weisen moderne Straßenbahnen üblicherweise einen Stoßbügel auf, der sich an der Front des Fahrzeugs von der einen Seite zur anderen Seite erstreckt und an seiner Vorderseite eine Aufprallfläche besitzt, die bei einem entsprechenden Aufprall (insbesondere bei Kollision mit einem gleichartigen Fahrzeug) Stoßkräfte aufnimmt und ableitet. Dabei ist der Stoßbügel über Stoßverzehrelemente mit der tragenden Konstruktion des Fahrzeugs verbunden. Bei den bereits genannten Fahrgeschwindigkeiten bis ca. 6 km/h können die Stoßverzehrelemente die allein auf den Stoßbügel wirkende Stoßenergie absorbieren. Je nach Ausgestaltung der Anordnung mit Stoßverzehrelementen findet dabei eine reversible und/oder irreversible Verformung der Stoßverzehrelemente statt.

Aufgabe der Erfindung ist es, eine Front-Anordnung für ein Fahrzeug, insbesondere für ein Schienenfahrzeug, z. B. eine Straßenbahn, mit einer Scheibenreinigungseinrichtung bereitzustellen, die zumindest bei Kollisionen des Schienenfahrzeuges mit geringer Fahrgeschwindigkeit vor Beschädigungen oder Zerstörung bewahrt werden kann. Eine weitere Aufgabe ist es, ein Fahrzeug mit einer solchen Front-Anordnung, ein Verfahren zum Herstellen einer solchen Front-Anordnung sowie ein Verfahren zum Betreiben eines Fahrzeuges, insbesondere eines Schienenfahrzeugs, z. B. eine Straßenbahnanzugeben.

Zur Lösung der Aufgabe wird vorgeschlagen, die Scheibenreinigungseinrichtung mit einem Aufprallelement an der Front des Fahrzeuges bzw. für die Front des Fahrzeuges zu koppeln und es zumindest Teilen der Scheibenreinigungseinrichtung somit zu ermöglichen, durch die Bewegung des Aufprallelementes beim Einwirken von Stoßkräften sich von dem kollidierenden Körper oder Gegenstand wegzubewegen. Dabei wird von der Erkenntnis ausgegangen, dass das Aufprallelement die Stoßkräfte auf zumindest ein Stoßverzehrelement überträgt und die Stoßenergie unter Bewegung des Aufprallelements von dem Stoßverzehrelement absorbiert wird. Der Erfindung liegt somit der Gedanke zu Grunde, die Scheibenreinigungseinrichtung derart an einem Aufprallelement des Schienenfahrzeuges zu befestigen, dass zumindest Teile der Einrichtung bei Kollision des Fahrzeuges keinen Stoßkräften ausgesetzt werden und so vor Beschädigungen oder Zerstörung bewahrt werden können, da sie infolge der kollisionsbedingten Bewegung des Aufprallelementes in eine Schutzposition gebracht werden.

Die Scheibenreinigungseinrichtung weist insbesondere eine Antriebseinrichtung und eine mit der Antriebseinrichtung verbundene Wischereinrichtung auf, sowie optional auch zumindest einen Flüssigkeitsbehälter. Insbesondere die Antriebseinrichtung und optional ein Getriebe zur Übertragung der Antriebskraft auf den Wischerarm und/oder der zumindest eine Flüssigkeitsbehälter wird/werden in die Schutzposition gebracht.

Insbesondere wird eine Front-Anordnung für ein Fahrzeug vorgeschlagen, insbesondere für ein Schienenfahrzeug, z. B. eine Straßenbahn, wobei die Front-Anordnung ein Aufprallelement mit einer nach vorne weisenden Aufprallfläche und eine Scheibenreinigungseinrichtung aufweist, die wiederum eine Antriebseinrichtung und eine von der Antriebseinrichtung antreibbare Frontscheiben-Wischereinrichtung aufweist, wobei das Aufprallelement ausgestaltet ist, bei einem Aufprall eines Körpers, insbesondere eines anderen Fahrzeuges, auf die Front des Fahrzeuges und damit auf die Aufprallfläche des Aufprallelementes Stoßkräfte aufzunehmen und abzuleiten und wobei das Aufprallelement mit zumindest einem Stoßverzehrelement gekoppelt ist. Die Scheibenreinigungseinrichtung ist an dem Aufprallelement für das Fahrzeuges befestigt, wobei das Aufprallelement und die daran befestigte Scheibenreinigungseinrichtung relativ zu einer Abstützung der Front-Anordnung und somit in einem in das Fahrzeug eingebauten Zustand relativ zu der tragenden Konstruktion des Fahrzeugs beweglich sind, um bei einem Auftreten der Stoßkräfte zurückzuweichen und ein Verzehren der einwirkenden Stoßenergie durch das zumindest eine Stoßverzehrelement zu ermöglichen.

Ferner wird ein Fahrzeug, insbesondere Schienenfahrzeug wie z. B. Straßenbahn, vorgeschlagen, wobei die Front-Anordnung in einem Frontbereich des Fahrzeugs angeordnet und über die Abstützung der Front-Anordnung mit der tragenden Konstruktion des Fahrzeugs verbunden ist und wobei aus Sicht der Antriebseinrichtung entgegen der Fahrtrichtung ein Freiraum vorhanden ist, in den hinein - bei einem Auftreten der Stoßkräfte auf die Aufprallfläche - die Antriebseinrichtung ausweicht.

Außerdem wird ein Verfahren zum Herstellen einer Front-Anordnung für ein Fahrzeug vorgeschlagen, insbesondere für ein Schienenfahrzeug, z. B. eine Straßenbahn, mit folgenden Schritten:
● Bereitstellen einer Scheibenreinigungseinrichtung, die eine Antriebseinrichtung und eine von der Antriebseinrichtung antreibbare Frontscheiben-Wischereinrichtung aufweist,
● Bereitstellen eines Aufprallelementes mit einer Aufprallfläche, wobei das Aufprallelement ausgestaltet ist, bei einem Aufprall eines Körpers, insbesondere eines anderen Fahrzeuges, auf die Front des Fahrzeuges und damit auf die Aufprallfläche des Aufprallelementes Stoßkräfte aufzunehmen und abzuleiten,
● Koppeln des Aufprallelements mit zumindest einem Stoßverzehrelement,
● Befestigen der Scheibenreinigungseinrichtung an dem Aufprallelement für das Fahrzeug und
● Ausgestalten des Aufprallelements und der daran befestigten
Scheibenreinigungseinrichtung relativ zu einer Abstützung der Front-Anordnung und somit in einem in das Fahrzeug eingebauten Zustand relativ zu der tragenden Konstruktion des Fahrzeugs als bewegliche Einheit, um bei einem Auftreten der Stoßkräfte zurückzuweichen und ein Verzehren der einwirkenden Stoßenergie durch das zumindest eine Stoßverzehrelement zu ermöglichen.

Zum Umfang der Erfindung gehört ferner ein Verfahren zum Betreiben eines Fahrzeuges, insbesondere eines Schienenfahrzeugs, z. B. eine Straßenbahn, wobei:
● bei einem Aufprall eines Körpers, insbesondere eines anderen Fahrzeuges, auf die Front des Fahrzeuges und damit auf eine Aufprallfläche eines Aufprallelementes des Fahrzeuges wirkende Stoßkräfte von dem Aufprallelement aufgenommen und auf zumindest ein mit dem Aufprallelement gekoppeltes Stoßverzehrelement abgeleitet werden, wobei sich das Aufprallelement in Richtung des zumindest einen Stoßverzehrelements bewegt,
● die Bewegung des Aufprallelements auf eine Scheibenreinigungseinrichtung des Fahrzeugs, die eine Antriebseinrichtung und eine von der Antriebseinrichtung antreibbare Frontscheiben-Wischereinrichtung aufweist, übertragen wird, sodass zumindest die Antriebseinrichtung und weitere Teile der Scheibenreinigungseinrichtung von dem Körper entfernt werden.

So ist in einer bevorzugten Ausgestaltung der Scheibenreinigungsreinrichtung vorgesehen, dass bei aufprallbedingter Kraftbeaufschlagung auf die Aufprallfläche des Aufprallelementes die Antriebseinrichtung und der Flüssigkeitsbehälter in einen freien Raum eines Bauteiles hinein verschiebbar sind. Bei dem Bauteil handelt es sich um ein Teil der tragenden Konstruktion des Fahrzeuges, beispielsweise um den Brustgurt, der in Fahrtrichtung hinter dem Aufprallelement angeordnet ist. Bei kollisionsbedingter Bewegung des Aufprallelementes in Richtung der Längsachse des Fahrzeuges werden Teile der auf ihm angebrachten Scheibenreinigungseinrichtung in einen hinter ihnen liegenden freien Raum, der vom Brustgurt gebildet wird, hinein verschoben. Der Brustgurt ist an dieser Stelle als ein gehäuseartiges Bauteil mit in Fahrtrichtung vorn liegender Öffnung, dass im Querschnitt ein U-Profil aufweist, ausgebildet. Bei den Teilen der Scheibenreinigungseinrichtung handelt es sich beispielsweise um den Flüssigkeitsbehälter und die Antriebseinrichtung, die bei einem Stoß auf das in Fahrtrichtung vorn liegende Aufprallelement in Fahrtrichtung nach hinten verschoben werden.

Insbesondere kann das Aufprallelement (auch als Anticlimber bezeichnet) ein Stoßbügel (auch als Stoßstange bezeichnet) sein, der beidseitig an seinen entgegengesetzten Enden über mindestens ein Stoßverzehrelement mit der tragenden Konstruktion verbunden ist. Der Stoßbügel kann entsprechend dem üblich gerundeten Design eines Schienenfahrzeuges konvex gekrümmt sein. Er kann vorzugsweise aus Metallprofilen oder als hochfestes Aluminium-Frästeil gefertigt sein und ist - im Gegensatz zu den Stoßverzehrelementen - bei Kollision mit einem Fahrzeug oder mit einem Gegenstand - formstabil. Letzteres gilt aber vorzugsweise auch allgemein für jegliches Aufprallelement, an dem die Scheibenreinigungseinrichtung befestigt ist.

Das Aufprallelement (insbesondere der Stoßbügel) und das zumindest eine Stoßverzehrelement befinden sich üblicherweise im Front- und Heckbereich des Schienenfahrzeuges. Sie sind typischerweise auf derselben Höhe über den Schienen angeordnet. Im Fall eines Stoßbügels sind die Stoßverzehrelemente insbesondere in Fahrtrichtung hinter dem Stoßbügel an dessen seitlichen Enden angeordnet, so dass bei einer Kollision die Stoßkräfte über die seitlichen Enden des Stoßbügels in die Stoßverzehrelemente eingeleitet werden. Die Stoßverzehrelemente werden dabei gegen eine hinter diesen liegende Fläche und/oder Gegenstand gedrückt. Dabei handelt es sich um ein Teil oder Teile der Fahrzeug-Karosserie. Die Stoßenergie wird - wenn die Stoßverzehrelemente keine Energie mehr aufnehmen können - in die Karosserie eingeleitet.

Damit die Stoßkräfte nicht nur exakt in Richtung der Fahrzeuglängsachse energieaufnehmend abgefangen werden können, ist vorzugsweise eine Führung (insbesondere mit Gleitflächen) vorhanden, die die Bewegungsrichtung oder einen Bereich von Bewegungsrichtungen (vorzugsweise eine oder mehrere horizontale Richtung(en) entgegen der Fahrtrichtung) des Aufprallelements bei einem frontalen Stoß vorgibt. Insbesondere nimmt die Führung die bei Kraftbeaufschlagungen durch Schräg- oder Querstöße auftretenden Kraftkomponenten wirksam auf und ermöglicht andererseits ein Zurückweichen des Aufprallelements aufgrund der Stoßkraft.

Das Aufprallelement nimmt beim Aufprall die Stoßkräfte und Stoßenergie auf und überträgt sie auf das zumindest eine Stoßverzehrelement, welches Stoßenergie aufnimmt, und diese in andere Energieformen wie potentielle Energie, Wärme und Verformungsenergie umwandelt. Insbesondere ist das Aufprallelement ausschließlich über das zumindest eine Stoßverzehrelement mit der tragenden Konstruktion des Fahrzeugs verbunden. Dies schließt nicht aus, wie es bei einer bevorzugten Ausführungsform der Fall ist, dass das Gewicht des Aufprallelements und der daran befestigten Scheibenreinigungseinrichtung zumindest teilweise von einer Unterstützung der tragenden Konstruktionen getragen wird, entlang der das Aufprallelement bei einer Kollision gleiten kann. Darüber hinaus sind Befestigungen des Aufprallelements unmittelbar an der tragenden Konstruktion denkbar, die allerdings in vordefinierter Weise bei einer Kollision aufbrechen. Da die für diesen Vorgang benötigte Energie ebenfalls einen Teil der Stoßenergie aufbraucht, können solche Sollbruchstellen ebenfalls als Stoßverzehrelemente betrachtet werden. Bevorzugt wird jedoch, dass die Befestigung des Aufprallelements an der tragenden Konstruktion allein über das zumindest eine Stoßverzehrelemente erfolgt.

Insbesondere kann das zumindest eine Stoßverzehrelement aus einer reversiblen und/oder irreversiblen Stufe gebildet sein. Stoßverzehrelemente lassen sich in irreversible und reversible einteilen, wobei auch Mischformen möglich sind. Bei Kombination von reversiblen mit irreversiblen Stoßverzehrelementen spricht man auch von zweistufig ausgeführten Stoßverzehrelementen. Die reversiblen Stoßverzehrelemente absorbieren bei Kollision Stoßenergie, wobei sie jedoch nicht plastisch verformt werden, während irreversible Stoßverzehrelemente beim Absorbieren von Stoßenergie plastisch deformiert werden. Beispiele für irreversible Stoßverzehrelemente sind wabenförmige Aluminiumstrukturen. Reversible Stoßverzehrelemente sind beispielsweise aus einer Kolben-/Zylindereinheit ausgebildet, wobei der Zylinder mit einer Flüssigkeit oder einem Elastomer gefüllt sein kann.

Insbesondere kann die Scheibenreinigungseinrichtung an einer nach oben weisenden Oberfläche des Aufprallelementes mit dem Aufprallelement befestigt sein. Damit kann erreicht werden, dass die Einrichtung beispielsweise im Fall einer Störung auf einfache Weise als Baugruppe montiert und wieder demontiert und - falls erforderlich - ausgetauscht werden kann. Dadurch kann das Aufprallelement an der für Schienenfahrzeuge üblichen Höhenposition angeordnet sein. Die Scheibenreinigungseinrichtung befindet sich in diesem Fall oberhalb des Aufprallelementes in dem Höhenbereich zwischen dem Aufprallelement und der Frontscheibe des Fahrzeugs. Die Befestigung an der nach oben weisenden Oberfläche hat dabei den Vorteil, dass die Aufprallfläche des Aufprallelementes wie auch sonst üblich gestaltet sein kann und die Übertragung der Stoßkräfte auf die Stoßverzehrelemente nicht behindert ist.

Vorteilhafter Weise ist die Scheibenreinigungseinrichtung über ein einstückiges Verbindungselement an dem Aufprallelement befestigt. Ein solches einstückiges Verbindungselement spart Gewicht und kann besonders stabil ausgeführt sein, um zu gewährleisten, dass die Scheibenreinigungseinrichtung bei der Bewegung des Aufprallelementes mitgenommen wird. Ferner kann für die weiter unten beschriebene bevorzugte Ausführungsform, bei der ein Teil des Wischerbügels von der Frontscheibe weggehebelt wird, gewährleistet werden, dass die erforderlichen Kräfte auf die Scheibenreinigungseinrichtung übertragen werden. Es ist allerdings anzumerken, dass dieselben Vorteile auch für die Befestigung der Scheibenreinigungseinrichtung an dem Aufprallelement über eine Mehrzahl von einstückigen Verbindungselementen gelten. Wenn mehrere Aufprallelemente vorgesehen sind, kann die Scheibenreinigungseinrichtung auch über jeweils ein Verbindungselement oder jeweils mehrere Verbindungselemente an den verschiedenen Aufprallelementen befestigt sein.

Oben wurde bereits erwähnt, dass bei Montage der Front-Anordnung in einem Fahrzeug bzw. an einem Fahrzeug ein Freiraum beibehalten wird, in den sich zumindest Teile der Scheibenreinigungseinrichtung zurückziehen können, wenn sie von dem Aufprallelement mitgenommen werden. Bei einer Weiterbildung des Fahrzeuges weist die Frontscheiben-Wischereinrichtung einen Wischerarm auf, der sich von einem Bereich vor der Frontscheibe über einen Rand der Frontscheibe hinweg erstreckt und sich während dem Antrieb durch die Antriebseinrichtung in dem Bereich vor der Frontscheibe entlang der Frontscheibe bewegt. Dabei weist das Fahrzeug im Randbereich außerhalb der Frontscheibe einen Vorsprung aufweist, sodass der Wischerarm bei aufprallbedingter Kraftbeaufschlagung auf das Aufprallelement und entsprechender Ausweichbewegung des Aufprallelementes und der Antriebseinrichtung an dem Vorsprung anschlägt, wodurch der Teil des Wischerarms im Bereich vor der Frontscheibe von der Frontscheibe weggehebelt wird. Andernfalls könnten der Wischerarm sowie die Frontscheibe bei Kollision und der damit verbundenen Bewegung des Aufprallelements beschädigt werden.

Insbesondere um ein Weghebeln des Wischerarm-Teils in verschiedenen Bewegungsstellungen des Wischerarms zu gewährleisten, ist der Vorsprung vorzugsweise als langgestrecktes Element (z. B. Leiste) ausgestaltet, das sich entlang dem Rand der Frontscheibe erstreckt. Insbesondere die Oberfläche des Vorsprungs kann durch ein elastomeres Material gebildet sein, sodass ein Anschlagen des Wischerarms zu einer Verformung des elastomeren Materials führt und somit der Wischerarm vor Beschädigungen geschützt wird.

Allgemein kann die Wischereinrichtung wenigstens einen Wischerarm und ein damit verbundenes Wischerblatt aufweisen, wobei mit dem Wischerarm eine Einrichtung (z. B. eine Antriebswelle und/oder ein Getriebe) gekoppelt ist, über die der Wischerarm bewegbar ist. Der Wischerarm wird von der Antriebseinrichtung (z. B. einem Elektromotor) angetrieben und ist zu diesem Zweck schwenkbar relativ zu der Antriebseinrichtung gelagert. Zusätzlich ist es üblich, dass Wischerarm und Wischerblatt beispielsweise für eine Reparatur oder Reinigung von der Front- oder Heckscheibe des Fahrzeuges weggeklappt, weggedreht und/oder demontiert werden können. Zu diesem Zweck ist am Wischerarm eine entsprechende Einrichtung vorgesehen. Dies kann im einfachsten Fall ein Gelenk sein, mit dem sich der Wischerarm von der Scheibe wegschwenken lässt. Diese Einrichtung erleichtert insbesondere das oben erwähnte Weghebeln bei Kollision.

Die Erfindung wird nachfolgend an einem Ausführungsbeispiel anhand von Zeichnungen näher erläutert. Es zeigen
- Figur 1: eine Darstellung einer Scheibenreinigungseinrichtung zur Montage an einem Aufprallelement über ein ebenfalls dargestelltes Befestigungselement,
- Figur 2: eine perspektivische Ansicht eines Frontbereichs (Fahrzeugkopfes) eines Schienenfahrzeuges mit der an einem Aufprallelement angebrachten Scheibenreinigungseinrichtung gemäß Fig. 1 und
- Figur 3: eine Seitenansicht des geöffnet dargestellten Frontbereiches der Anordnung gemäß Fig. 2.

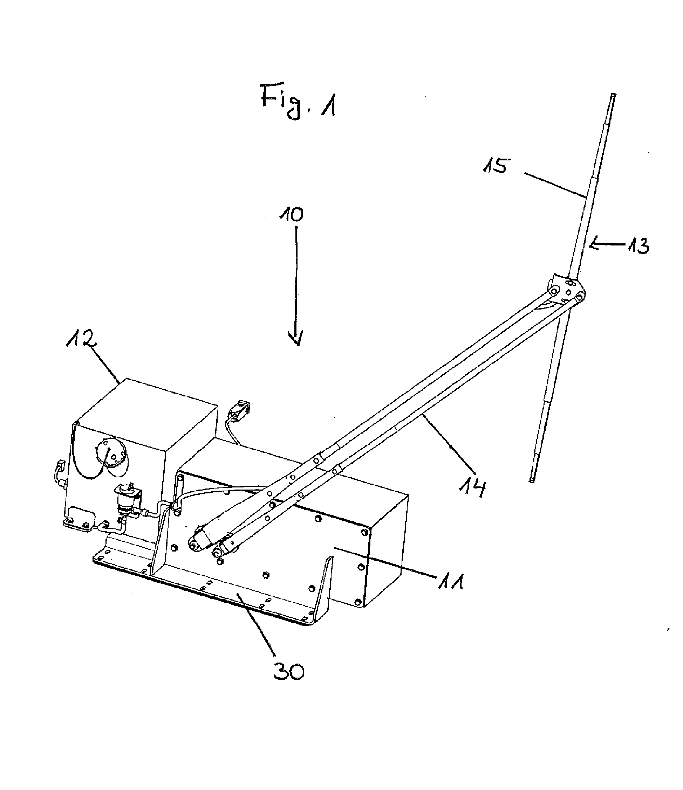

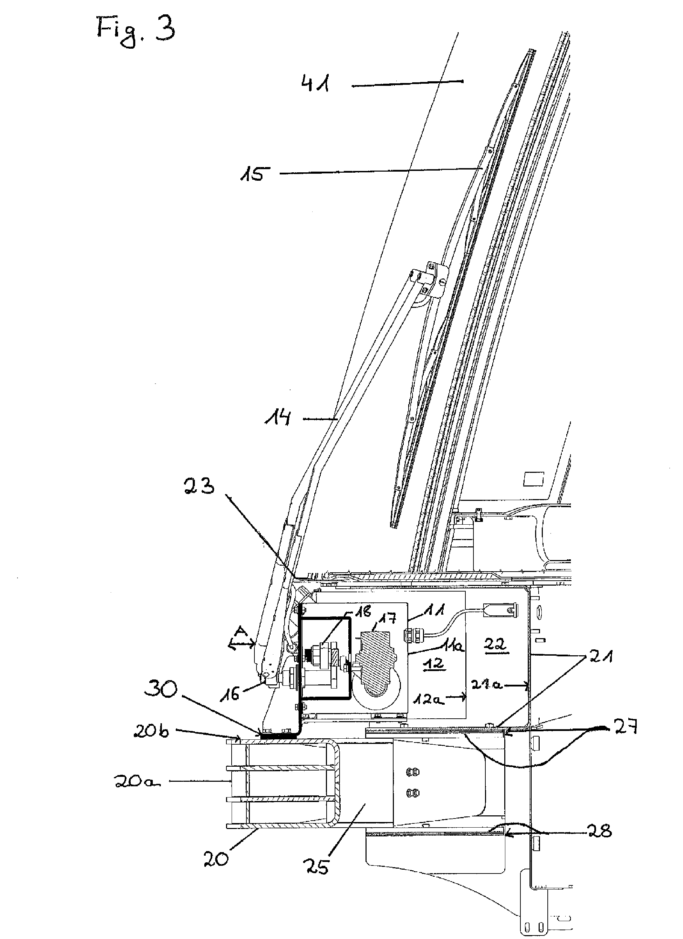

Gemäß Figur 1 weist eine Scheibenreinigungseinrichtung 10 eine kastenförmige Einheit 11 auf, die eine Antriebseinrichtung 17 (Elektromotor) und ein Getriebe 18 (siehe Fig. 3) enthält. Das Getriebe ist abtriebsseitig mit einer Wischereinrichtung 13, bestehend aus Wischerarm 14 und Wischerblatt 15, verbunden, sodass der Wischerarm 14 von der Antriebseinrichtung 11 antreibbar ist und sich entlang der Frontscheibe 41 hin- und herbewegen kann. Ferner ist ein Flüssigkeitsbehälter 12 vorhanden, der mit einer Flüssigkeit mit Reinigungsmittel befüllbar ist, um die Frontscheibe 41 während der Fahrt reinigen zu können. Die kastenförmige Einheit 11 und der Flüssigkeitsbehälter 12 sind mit einem Befestigungselement 30 verbunden, das als einstückiges Winkelprofil ausgestaltet ist, welches mit seinem waagerecht verlaufenden unteren Schenkel auf der oberen Fläche eines Aufprallelements befestigbar ist (Fig. 3). Sein in vertikaler Richtung verlaufender oberer Schenkel trägt einen wesentlichen Teil des Gewichts der Scheibenreinigungseinrichtung 10, wie aus Fig. 3 zu entnehmen ist, kann aber der in Fahrtrichtung weiter hinten liegende Teil der Scheibenreinigungseinrichtung 10, d. h. insbesondere der hintere Bereich der kastenförmigen Einheit 11 und des Flüssigkeitsbehälters 12 gleitend auf einer Unterlage befestigt sein, die Teil der tragenden Konstruktion des Fahrzeugs ist oder unmittelbar mit der tragenden Konstruktion des Fahrzeugs verbunden ist.

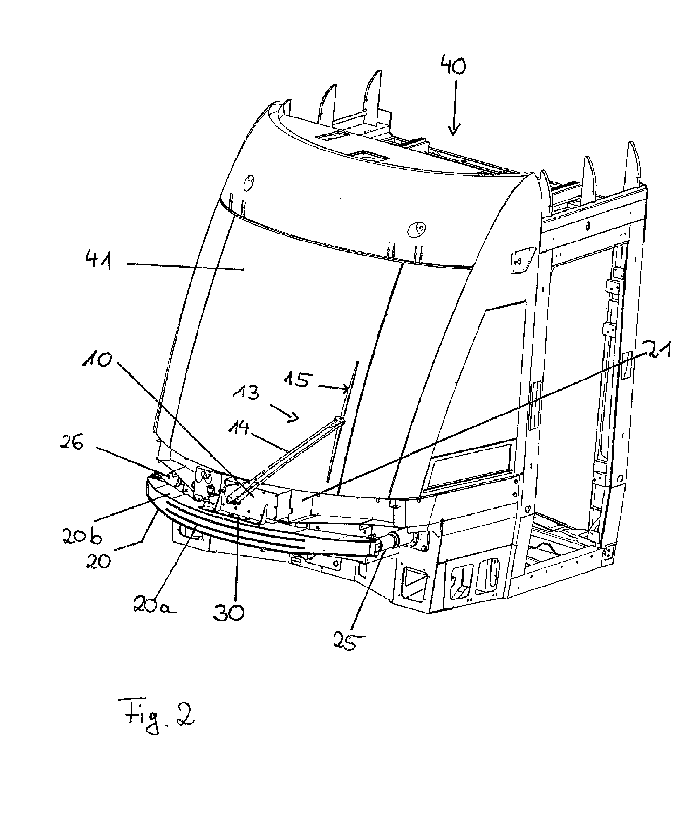

Figur 2 zeigt den Frontbereich eines Schienenfahrzeuges. Im oberen Teil der Zeichnung ist eine Frontscheibe 41 mit anliegendem Wischerblatt 15 zu sehen. Im unteren Teil der Zeichnung ist ein Aufprallelement 20 in Form eines Stoßbügels dargestellt, der sich über einen wesentlichen Teil der Breite des Fahrzeugkopfes 40 bzw. des Schienenfahrzeuges konvex gekrümmt erstreckt. Der Stoßbügel 20 befindet sich in Fahrtrichtung vorn (oder bei Betrieb in entgegengesetzter Richtung hinten). Die Front-Anordnung ist so ausgestaltet, dass der Stoßbügel 20 nur mit geringem Abstand A (siehe Fig. 3) vor dem Wischerarm 14 der Scheibenreinigungseinrichtung 10 endet. Dieser Abstand beträgt z. B. 35 bis 45 mm. Bei Kollision führen der Stoßbügel 20 und daher auch die Scheibenreinigungseinrichtung 10 z. B. eine in Fahrzeuglängsrichtung verlaufende lineare Bewegung um bis zu 50 mm aus (linearer Hub des Stoßbügels). Dies führt zu einem Weghebeln des Wischerarms von der Frontscheibe (s. u.).

Der Stoßbügel 20 ist an seinen entgegengesetzten Enden jeweils an einem Stoßverzehrelement 25, 26 befestigt. In Fig. 2 ist nur ein Stoßverzehrelement 25 deutlich erkennbar. Die Stoßverzehrelemente 25, 26 sind z. B. zweistufig aufgeführt und parallel zueinander angeordnet. Sie nehmen Stoßkräfte in Längsrichtung (Fahrtrichtung) des Fahrzeugs auf und verzehren dabei Stoßenergie. Dabei weicht der Stoßbügel 20 entgegen der Fahrtrichtung zurück. Die Stoßverzehrelemente 25, 26 sind z. B. so ausgebildet, dass insgesamt (z. B. durch reversible und irreversible Stoßverzehrelemente) ein linearer Hub von 400 mm ausführbar ist, während Stoßenergie verzehrt wird.

Auf einer nach oben weisenden Oberfläche 20b des Stoßbügels 20 ist die Scheibenreinigungseinrichtung 10 ist der waagerecht verlaufende Schenkel des Befestigungselements 30 befestigt. Zu erkennen ist ferner ein sich horizontaler Richtung erstreckender Träger 21 der tragenden Konstruktion des Fahrzeugs, der üblicher Weise als Brustgurt bezeichnet wird. Er verläuft auf Höhe der kastenförmigen Einheit 11 und des Flüssigkeitsbehälters 12. Der Träger 21 bildet oder trägt im Bereich der Scheibenreinigungseinrichtung 10 eine gehäuseartige Aufnahme für die Scheibenreinigungseinrichtung 10, wobei die Vorderseite des Aufnahmeraums geöffnet ist. Die kastenförmige Einheit 11 und der Flüssigkeitsbehälter 12 ragen teilweise in den Aufnahmeraum hinein. Dabei lässt der Aufnahmeraum einen Freiraum 22 (Fig. 3) für ein Zurückweichen der kastenförmigen Einheit 11 und des Flüssigkeitsbehälters 12 Richtung Träger 21. Innerhalb des Freiraumes 22 beträgt der Abstand der Hinterkante 12a des Flüssigkeitsbehälters 12 zur Oberfläche des Trägers z. B. zwischen 55 und 150 mm und der Abstand von der Hinterkante 11 a der kastenförmigen Einheit 11 zur Oberfläche des Trägers 21 z. B. zwischen 150 und 250 mm.

Bei einem Stoß auf die Fläche 20a des Stoßbügels 20 wird dieser in Richtung der Längsachse des Fahrzeuges, d. h. in Fahrtrichtung nach hinten bewegt. Die Teile 11, 12 der Scheibenreinigungseinrichtung 10, welche über das Befestigungselement 30auf der Oberfläche 20b befestigt sind, werden bei der Bewegung mitgenommen und bewegen sich daher ebenfalls nach hinten in den Freiraum 22 hinein.

Figur 3 zeigt eine vereinfacht Anordnung des Frontbereiches, wobei Teile der Scheibenreinigungseinrichtung 10 und tragende Teile des Schienenfahrzeuges geschnitten dargestellt sind. Gezeigt wird der Zustand vor einer Kollision (Crash), d.h. vor dem Einwirken von Stoßkräften auf die Aufprallfläche 20a des Stoßbügels 20.

Erkennbar sind die Antriebseinrichtung 17 und das Getriebe 18, der Flüssigkeitsbehälter 12 sowie der Wischerarm 14 und das Wischerblatt 15 als Teile der Wischereinrichtung 13. Das Wischerblatt 15 liegt auf der Frontscheibe 41 auf. Der Wischerarm 14 ist mit der Antriebseinrichtung 11 verbunden. Am unteren Ende des Wischerarmes 14 ist eine gelenkige Einrichtung 16 vorgesehen, die ein Wegschwenken des Wischerarmes 14 von der Frontscheibe 41 erlaubt.

Ferner ist im unteren Randbereich der Frontscheibe 41 eine in Fahrtrichtung über die Frontscheibe vorspringende Leiste 23 angeordnet, die sich zumindest über einen Teil der Breite der Frontscheibe 41 erstreckt. Bei einem Aufprall schlägt der Wischerarm 14 an die Leiste 23 an, weil er von dem Stoßbügel mitgenommen wird, und wird sein oberer Teil mit dem Wischerblatt 15 von der Frontscheibe 41 weggehebelt.

Wie Fig. 3 zeigt ist der von dem Träger 21 gebildete Aufnahmeraum für die Scheibenreinigungseinrichtung 10 im Längsschnitt U-förmig. Unterhalb des Aufnahmeraums ist eine Führung mit einer oberen, nach unten weisenden ersten Gleitfläche 27 und einer unteren, nach oben weisenden Gleitfläche 28 angeordnet. Die Gleitflächen 27, 28 werden z. B. vom Träger 21 oder anderen Teilen der Fahrzeugkarosserie getragen. Die Gleitflächen 27, 28 begrenzen einen zweiten Aufnahmeraum zur Aufnahme von Teilen des Stoßbügels 20 und/oder eines mit dem Stoßbügel 20 gekoppelten Stoßverzehrelements 25. Bei einem Aufprall des Fahrzeugs, der Stoßkräfte auf die Aufprallfläche 20a bewirkt, können deshalb der Stoßbügel 20 und das Stoßverzehrelement 25 durch die Gleitflächen 27, 28 geführt entgegen der Fahrtrichtung zurückweichen.

### Bezugszeichenliste

- 10: Scheibenreinigungseinrichtung
- 11: kastenförmige Einheit mit Antriebseinrichtung
- 11a: Hinterkante der Antriebseinrichtung
- 12: Flüssigkeitsbehälter
- 12a: Hinterkante des Flüssigkeitsbehälters
- 13: Wischereinrichtung
- 14: Wischerarm
- 15: Wischerblatt
- 16: gelenkige Einrichtung
- 17: Antriebseinrichtung
- 18: Getriebe
- 20: Aufprallelement
- 20a: Aufprallfläche des Aufprallelementes
- 20b: obere Oberfläche
- 21: Träger
- 21a: Kante des Bauteiles
- 22: freier Raum des Bauteiles
- 23: Leiste
- 25: Stoßverzehrelement
- 26: Stoßverzehrelement
- 27: Gleitfläche
- 28: Gleitfläche
- 30: Befestigungselement

- 40: Fahrzeugkopf
- 41: Frontscheibe

- A: Abstand

## Patentansprüche

1. Front-Anordnung für ein Fahrzeug, insbesondere für ein Schienenfahrzeug, z. B. eine Straßenbahn, wobei die Front-Anordnung ein Aufprallelement (20) mit einer nach vorne weisenden Aufprallfläche (20a) und eine Scheibenreinigungseinrichtung (10) aufweist, die wiederum eine Antriebseinrichtung (11) und eine von der Antriebseinrichtung (11) antreibbare Frontscheiben-Wischereinrichtung (13) aufweist, wobei das Aufprallelement (20) ausgestaltet ist, bei einem Aufprall eines Körpers, insbesondere eines anderen Fahrzeuges, auf die Front des Fahrzeuges und damit auf die Aufprallfläche (20a) des Aufprallelementes (20) Stoßkräfte aufzunehmen und abzuleiten und wobei das Aufprallelement mit zumindest einem Stoßverzehrelement gekoppelt ist,
**dadurch gekennzeichnet, dass**
die Scheibenreinigungseinrichtung (10) an dem Aufprallelement (20) für das Fahrzeuges befestigt ist und wobei das Aufprallelement und die daran befestigte Scheibenreinigungseinrichtung (10) relativ zu einer Abstützung der Front-Anordnung und somit in einem in das Fahrzeug eingebauten Zustand relativ zu der tragenden Konstruktion des Fahrzeugs beweglich ist, um bei einem Auftreten der Stoßkräfte zurückzuweichen und ein Verzehren der einwirkenden Stoßenergie durch das zumindest eine Stoßverzehrelement zu ermöglichen.

2. Front-Anordnung nach dem vorhergehenden Anspruch, wobei als Aufprallelement (20) ein Stoßbügel vorgesehen ist, der an seinen entgegengesetzten Enden mit mindestens einem Stoßverzehrelement (25, 26) gekoppelt ist.

3. Front-Anordnung nach einem der vorhergehenden Ansprüche, wobei die Scheibenreinigungseinrichtung (10) an einer nach oben weisenden Oberfläche (20b) des Aufprallelementes (20) mit dem Aufprallelement (20) befestigt ist.

4. Front-Anordnung nach einem der vorhergehenden Ansprüche, wobei die Scheibenreinigungseinrichtung (10) über ein einstückiges Verbindungselement (30) an dem Aufprallelement (20) befestigt ist.

5. Fahrzeug, insbesondere Schienenfahrzeug, wobei die Front-Anordnung gemäß einem der Ansprüche 1 bis 4 in einem Frontbereich des Fahrzeugs angeordnet und über die Abstützung der Front-Anordnung mit der tragenden Konstruktion des Fahrzeugs verbunden ist und wobei aus Sicht der Antriebseinrichtung entgegen der Fahrtrichtung ein Freiraum vorhanden ist, in den hinein - bei einem Auftreten der Stoßkräfte auf die Aufprallfläche (20a) - die Antriebseinrichtung (11) ausweicht.

6. Fahrzeug nach dem vorhergehenden Anspruch, wobei die Frontscheiben-Wischereinrichtung (13) einen Wischerarm (14) aufweist, der sich von einem Bereich vor der Frontscheibe über einen Rand der Frontscheibe hinweg erstreckt und sich während dem Antrieb durch die Antriebseinrichtung (11) in dem Bereich vor der Frontscheibe entlang der Frontscheibe bewegt, wobei das Fahrzeug im Randbereich außerhalb der Frontscheibe einen Vorsprung aufweist, sodass der Wischerarm (14) bei aufprallbedingter Kraftbeaufschlagung auf das Aufprallelement (20) und entsprechender Ausweichbewegung des Aufprallelementes (20) und der Antriebseinrichtung (11) an dem Vorsprung anschlägt, wodurch der Teil des Wischerarms (14) im Bereich vor der Frontscheibe von der Frontscheibe weggehebelt wird.

7. Verfahren zum Herstellen einer Front-Anordnung für ein Fahrzeug, insbesondere für ein Schienenfahrzeug, z. B. eine Straßenbahn, mit folgenden Schritten:
● Bereitstellen einer Scheibenreinigungseinrichtung (10), die eine Antriebseinrichtung (11) und eine von der Antriebseinrichtung (11) antreibbare Frontscheiben-Wischereinrichtung (13) aufweist,
● Bereitstellen eines Aufprallelementes (20) mit einer Aufprallfläche (20a), wobei das Aufprallelement (20) ausgestaltet ist, bei einem Aufprall eines Körpers, insbesondere eines anderen Fahrzeuges, auf die Front des Fahrzeuges und damit auf die Aufprallfläche (20a) des Aufprallelementes (20) Stoßkräfte aufzunehmen und abzuleiten,
● Koppeln des Aufprallelements mit zumindest einem Stoßverzehrelement, **gekennzeichnet durch**
Befestigen der Scheibenreinigungseinrichtung (10) an dem Aufprallelement (20) für das Fahrzeug und
Ausgestalten des Aufprallelements und der daran befestigten Scheibenreinigungseinrichtung (10) relativ zu einer Abstützung der Front-Anordnung und somit in einem in das Fahrzeug eingebauten Zustand relativ zu der tragenden Konstruktion des Fahrzeugs als bewegliche Einheit, um bei einem Auftreten der Stoßkräfte zurückzuweichen und ein Verzehren der einwirkenden Stoßenergie **durch** das zumindest eine Stoßverzehrelement zu ermöglichen.

8. Verfahren zum Herstellen eines Fahrzeugs, wobei die Front-Anordnung gemäß dem vorhergehenden Anspruch in einem Frontbereich des Fahrzeugs angeordnet und über die Abstützung der Front-Anordnung mit der tragenden Konstruktion des Fahrzeugs verbunden wird und wobei aus Sicht der Antriebseinrichtung entgegen der Fahrtrichtung ein Freiraum freigehalten wird, in den - bei einem Auftreten der Stoßkräfte auf die Aufprallfläche (20a) - hinein die Antriebseinrichtung (11) ausweichen kann.

9. Verfahren zum Herstellen eines Fahrzeugs nach dem vorhergehenden Anspruch, wobei für die Frontscheiben- Wischereinrichtung (13) ein Wischerarm (14) bereitgestellt und derart angeordnet wird, dass sich der Wischerarm (14) von einem Bereich vor einer Frontscheibe des Fahrzeugs über einen Rand der Frontscheibe hinweg erstreckt und sich während dem Antrieb durch die Antriebseinrichtung (11) in dem Bereich vor der Frontscheibe entlang der Frontscheibe bewegt, wobei am Fahrzeug im Randbereich außerhalb der Frontscheibe ein Vorsprung vorgesehen wird, sodass der Wischerarm (14) bei aufprallbedingter Kraftbeaufschlagung auf das Aufprallelement (20) und entsprechender Ausweichbewegung des Aufprallelementes (20) und der Antriebseinrichtung (11) an dem Vorsprung anschlägt, wodurch der Teil des Wischerarms (14) im Bereich vor der Frontscheibe von der Frontscheibe weggehebelt wird.

10. Verfahren zum Betreiben eines Fahrzeuges, insbesondere eines Schienenfahrzeugs, z.
B. eine Straßenbahn, wobei:
● bei einem Aufprall eines Körpers, insbesondere eines anderen Fahrzeuges, auf die Front des Fahrzeuges und damit auf eine Aufprallfläche (20a) eines Aufprallelementes (20) des Fahrzeuges wirkende Stoßkräfte von dem Aufprallelement (20) aufgenommen und auf zumindest ein mit dem Aufprallelement gekoppeltes Stoßverzehrelement abgeleitet werden, wobei sich das Aufprallelement (20) in Richtung des zumindest einen Stoßverzehrelements bewegt,
● die Bewegung des Aufprallelements (20) auf eine Scheibenreinigungseinrichtung (10) des Fahrzeugs, die eine Antriebseinrichtung (11) und eine von der Antriebseinrichtung (11) antreibbare Frontscheiben-Wischereinrichtung (13)aufweist, übertragen wird, sodass zumindest die Antriebseinrichtung (11) und weitere Teile der Scheibenreinigungseinrichtung (10) von dem Körper entfernt werden.
